(19) **Europäisches Patentamt / European Patent Office / Office européen des brevets**

(11) **EP 3 498 069 B1**

(12) **FASCICULE DE BREVET EUROPEEN**

(45) Date de publication et mention
de la délivrance du brevet:
**02.12.2020 Bulletin 2020/49**

(51) Int Cl.:
*A01C 23/00* (2006.01)    *G01N 21/85* (2006.01)
*G01N 21/359* (2014.01)

(21) Numéro de dépôt: **18202152.7**

(22) Date de dépôt: **23.10.2018**

(54) **TONNE ÉQUIPÉE D'UN DISPOSITIF DE DÉTERMINATION DE LA CONCENTRATION D'UN COMPOSÉ CHIMIQUE D'UN EFFLUENT D'ÉLEVAGE CONTENU DANS LA TONNE ET PROCÉDÉ CORRESPONDANT**

TANK MIT EINER VORRICHTUNG ZUR BESTIMMUNG DER KONZENTRATION EINER CHEMISCHEN VERBINDUNG EINES IM TANK ENTHALTENEN, AUS ZUCHTBETRIEBEN STAMMENDEN ABWASSERS UND DAS ENTSPRECHENDE VERFAHREN

TANK EQUIPPED WITH A DEVICE FOR DETERMINING THE CONCENTRATION OF A CHEMICAL COMPOUND OF ANIMAL HUSBANDRY EFFLUENT CONTAINED IN THE TANK AND THE CORRESPONDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2017 FR 1761957**

(43) Date de publication de la demande:
**19.06.2019 Bulletin 2019/25**

(73) Titulaire: **Mauguin Citagri**
**53940 Saint Berthevin (FR)**

(72) Inventeur: **CHA, Philippe**
**35750 Iffendic (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
WO-A1-00/64242         WO-A2-01/69213
DE-U1-202006 015 589   DE-U1-202015 005 512

## Description

### 1. Domaine de l'invention

L'invention se rapporte au domaine du matériel agricole.

Plus précisément, l'invention concerne une tonne, telle qu'une tonne à lisier, et un procédé de détermination de la concentration d'au moins un élément chimique présent dans un effluent contenu dans la cuve d'une tonne correspondant.

L'invention trouve notamment une application lors de l'épandage des effluents d'élevage transportés dans une tonne.

### 2. État de la technique

L'élevage intensif en bâtiment est une source importante de production de lisier. Pour valoriser ce sous-produit riche notamment en azote, on a pensé à répandre comme engrais organique naturel pour l'amendement et la fertilisation des sols, ce qui permet de réduire le recours aux engrais artificiels commercialisés par l'industrie chimique.

Un temps minimal est cependant nécessaire pour que l'azote que l'on trouve majoritairement sous forme organique dans du lisier se transforme en azote minéral directement et rapidement assimilable par les plantes.

L'analyse des sols, des cours d'eau et des nappes phréatiques a montré qu'un épandage d'une quantité excessive et incontrôlée de lisier était une source de pollution importante de l'environnement. Notamment, l'azote provenant du lisier qui n'est pas absorbé par les plantes se transforme en nitrates qui se retrouvent dans les nappes phréatiques, par ruissellement, dès qu'il pleut.

Afin de mieux répartir le lisier sous les sols, on a proposé de mettre en oeuvre des épandeurs à lisier à rampe basse, ou des épandeurs à rampe à pendillards.

Ces techniques connues n'apportent pas de solution cependant pour limiter les apports en matière azotée, qui dépendent non seulement de la quantité de lisier épandue par hectare, mais aussi de la concentration en azote du lisier contenu dans la tonne. Or, les agriculteurs sont généralement enclins à surdoser les apports en lisier pour éviter une baisse de rendement sur leurs parcelles.

Ainsi, au fil des ans le législateur a mis en place différentes réglementations ou directives, telle que la directive nitrate 91/676/CEE pour encadrer l'usage des déchets organiques issus de l'agriculture et protéger les ressources hydriques contre la pollution des nitrates ou des phosphates.

Pour répondre à ces problématiques, on a introduit un plan d'épandage pour chaque élevage dont le respect est périodiquement contrôlé. Ce plan d'épandage comprend une estimation de la quantité d'effluents produits en fonction de l'espèce et du nombre de tête sur l'élevage, et détaille entre autres la liste des parcelles utilisables, la surface utile, la quantité des effluents à épandre selon un calendrier prévisionnel.

Un plan d'épandage ne permet pas cependant de connaitre avec exactitude la teneur en azote ou en phosphate des lisiers dans une exploitation agricole, compte-tenu du fait que celle-ci peut fortement varier, notamment en fonction des ajustements sur les mélanges des compositions alimentaires servies aux animaux. Ainsi, l'agriculteur en respectant un plan d'épandage évite en théorie de polluer l'environnement, mais il ne maîtrise pas l'apport en nutriments sur les sols lors de l'épandage.

Afin de remédier à ce problème, on a pensé à utiliser des bandelettes réactives dont la couleur change en fonction de la concentration en azote du lisier.

Cette technique d'analyse, dont la marge d'erreur atteint 30%, présente l'inconvénient d'être assez peu fiable.

Certains agriculteurs ont également recourt à un bilan de fertilisation qui permet de contrôler périodiquement la compatibilité des fertilisants contenus dans l'effluent produit avec les besoins des cultures pratiquées sur les parcelles destinataires.

Un bilan de fertilisation est cependant coûteux et ne permet pas de disposer immédiatement de résultats, étant donné que les échantillons doivent être analysés en laboratoire. Ce bilan de masse d'une exploitation ne peut donc pas être pratiqué à chaque épandage.

Un autre inconvénient du bilan de fertilisation est qu'il ne tient pas compte de la transformation plus ou moins importante par fermentation de l'effluent, au cours de la période le stockage précédant l'épandage qui impacte sa composition. Or, l'utilisation des lisiers comme fertilisant des sols dans le respect des réglementations en vigueur ne peut être maîtrisée que si la composition de celui-ci est connue au moment de l'épandage.

Plus récemment, on a pensé à équiper la rampe d'épandage des tonnes à lisier d'un dispositif d'analyse du lisier par spectrométrie dans le proche infrarouge qui estime la concentration de certains éléments chimiques tels que l'azote, le phosphore, ou le potassium dans le lisier au fur et à mesure qu'il est épandu et régule l'ouverture de la vanne de distribution du lisier en conséquence.

Toutefois, cette technique connue d'analyse de la composition chimique du lisier lors de la distribution de ce dernier manque de précision. En effet, le flux important d'effluent dans la rampe lors de la distribution génère des bulles ou de la mousse qui affecte la qualité des mesures. En outre, le produit peut contenir des corps étrangers tels du sable, ou des cailloux qui perturbent encore les analyses.

On connait du document DE 20 2006 015 589 U1 une tonne à lisier équipée d'un capteur d'analyse par spectrométrie destiné à évaluer la composition du lisier monté sur le tube de remplissage de la cuve de cette tonne. Les mesures réalisées par ce capteur sont transmises à un module de contrôle qui commande l'ouverture d'une vanne de distribution du lisier en fonction de cette composition.

On connait également du document DE 20 2015 005 512 U1 une installation de remplissage de tonnes à lisier, qui mélange du lisier pompé dans une fosse à lisier avec une solution, afin délivrer une mélange de composition constante dans la tonne à lisier. Cette installation est équipée d'un capteur d'analyse de la composition du lisier pompé par spectrométrie dans le proche infrarouge et d'un calculateur qui assure le contrôle du mélange.

## 1. Objectifs de l'invention

L'invention a donc notamment pour objectif de pallier les inconvénients de l'état de la technique cités ci-dessus.

Plus précisément l'invention a pour objectif de fournir une technique de détermination in situ, directement sur une tonne, de la concentration en éléments chimiques d'un effluent d'élevage, tels que l'azote ou le phosphore ou le potassium, qui soit fiable et précise quelle que soit l'espèce des animaux qui ont généré cet effluent.

Notamment, un objectif de l'invention est de fournir une telle technique qui permette une meilleure utilisation des nutriments en suspension dans un effluent tout en respectant les réglementations sur l'épandage les plus strictes.

Un autre objectif de l'invention est de fournir une telle technique qui permette de raccourcir l'intervalle entre deux épandages sur une parcelle de terre déterminée et donc augmenter le volume total de lisier épandu sur celle-ci sur une période donnée.

Encore un objectif de l'invention est de proposer une telle technique qui permette de baisser le coût des récoltes par une réduction du recours aux engrais chimiques et donc des économies par kilogramme de produits végétaux produits.

Un objectif de l'invention est également de fournir une telle technique qui soit d'un coût de revient réduit.

Un autre objectif de l'invention est de fournir une telle technique qui soit simple à mettre en œuvre.

## 4. Exposé de l'invention

Ces objectifs, ainsi que d'autres qui apparaîtront par la suite sont atteints à l'aide d'une tonne destinée à contenir au moins un effluent d'élevage, tel que du lisier, comprenant :

- un conduit raccordé sensiblement à la base de la cuve de ladite tonne ;
- des moyens de détermination de la concentration d'au moins un élément chimique présent dans ledit effluent comprenant :

  - un capteur d'analyse spectrométrique dans le proche infrarouge orienté vers une partie dudit conduit apte à permettre la propagation des ondes électromagnétiques dans le proche infrarouge au travers de celle-ci, ledit capteur étant apte à mesurer des valeurs de l'absorbance dudit effluent pour différentes longueurs d'ondes dans une bande de longueur d'ondes prédéterminée du domaine proche infrarouge ;

- des moyens d'acquisition d'une pluralité desdites mesures de valeurs de l'absorbance, destinés à être activés lors du remplissage de ladite cuve ; et
- des moyens de traitement desdites mesures acquises configurés de sorte à fournir une valeur de ladite concentration à partir desdites mesures.

- des moyens de génération d'un signal contenant des instructions d'actionnement d'une vanne de distribution dudit effluent et/ou de contrôle de l'avance d'un tracteur tirant ladite tonne en fonction de ladite ou desdites concentrations.

Une telle tonne est donc principalement destinée au transport et à l'épandage des lisiers. Il peut cependant être envisagé que la tonne puisse contenir des eaux et/ou boues de stations d'épuration dont le taux de matière sèche est inférieur ou égale à 6% et le pH est sensiblement neutre, sans sortir du cadre de l'invention.

Selon l'invention, ledit conduit est un conduit inapte à permettre le déversement dudit effluent sur un sol, tel qu'un tube de jauge, et ledit capteur et lesdits moyens d'acquisition sont destinés à être activés lors du remplissage de ladite cuve.

Ainsi, de façon inédite, l'invention propose de mesurer l'absorbance de l'effluent dans un conduit communiquant avec la cuve, tel qu'un tube de jauge, lors du remplissage de la cuve de la tonne, ce qui est avantageux, car la vitesse de l'effluent dans le conduit étant alors peu importante, on peut effectuer des mesures fiables.

Le conduit peut être tout conduit communiquant avec la base de la cuve, à l'exception d'une rampe d'épandage ou d'un conduit de jonction entre la cuve et une rampe d'épandage.

Dans un mode de réalisation particulièrement avantageux de l'invention, une tonne telle que décrite ci-dessus comprend des moyens d'activation dudit capteur et desdits moyens d'acquisition sensiblement au démarrage du remplissage de ladite cuve.

La détermination de la concentration d'au moins un élément chimique présent dans l'effluent peut ainsi être automatisée. La seule donnée devant être fournie au préalable par l'utilisateur de la tonne étant l'espèce ou le type d'animaux ayant généré l'effluent dont on remplit la cuve de la tonne.

Il convient de noter que dans le cadre de l'invention, on entend par l'expression « sensiblement au démarrage du remplissage de la cuve », que le capteur et les moyens d'acquisition sont activés quelques secondes, et de préférence moins de 10 secondes après le démarrage du remplissage de la cuve.

Selon un mode de réalisation particulier de l'invention, ladite partie dudit conduit apte à permettre la propagation des ondes électromagnétiques dans le proche infrarouge au travers de celui-ci comprend un hublot obstruant au moins partiellement une lumière formée dans une paroi d'un tube.

Avantageusement, ledit hublot est monté amovible et/ou basculant par rapport audit tube.

On peut ainsi nettoyer aisément l'intérieur du conduit.

Selon un aspect particulier de l'invention, la surface interne et la surface externe dudit hublot sont sensiblement planes.

Selon un aspect particulier de l'invention, la surface externe dudit hublot est sensiblement verticale.

Dans un mode de réalisation avantageux de l'invention, ladite partie dudit conduit apte à permettre la propagation des ondes électromagnétiques dans le proche infrarouge au travers de celle-ci est sensiblement horizontale et située à proximité de la base de la cuve.

Selon un aspect particulier de l'invention, ledit capteur d'analyse spectrométrique est monté sur un volet mobile par rapport audit conduit.

Selon un aspect particulier de l'invention, ledit capteur d'analyse spectrométrique présente un détecteur infrarouge d'axe orthogonal à la surface externe dudit hublot.

Dans un mode de réalisation particulier de l'invention, ladite bande de longueur d'ondes prédéterminée présente une borne inférieure comprise entre 1350 et 1600 nm, de préférence égale à 1550nm et une borne supérieure comprise entre 1800 et 2450 nm, de préférence est égale à 1950nm.

Dans des variantes de ce mode de réalisation particulier de l'invention, ladite bande de longueur d'ondes peut présenter toute autre borne inférieure et toute autre borne supérieure dans le domaine proche infrarouge

De façon avantageuse, ledit capteur d'analyse spectrométrique et ladite partie du conduit apte à permettre la propagation des ondes électromagnétiques dans le proche infrarouge au travers de celle-ci, sont agencées l'un par rapport à l'autre de sorte qu'un point focal de l'émetteur dudit capteur d'analyse spectrométrique est situé à l'intérieur dudit conduit, à une distance de 0,01 à 7 mm de la paroi interne de ladite partie dudit conduit.

Ainsi, on peut mesurer l'absorbance à différentes profondeurs dans le conduit.

De préférence, ledit capteur d'analyse spectrométrique est apte à mesurer au moins 2000, de préférence au moins 3000, encore plus préférentiellement au moins 4000 valeurs de l'absorbance dans ladite bande de longueur d'ondes prédéterminée, par seconde.

Dans un mode de réalisation préférentiel de l'invention, la valeur de l'absorbance dudit capteur d'analyse spectrométrique est ajustée à une valeur nulle lorsque ladite partie du conduit est vide et propre.

L'invention concerne également un procédé de détermination de la concentration d'au moins un élément chimique présent dans un effluent contenu dans la cuve d'une tonne telle que l'une des tonnes décrites ci-dessus, comprenant un conduit inapte à permettre le déversement dudit effluent sur un sol et raccordé sensiblement à la base de la cuve de ladite tonne, comprenant des moyens de détermination de la concentration d'au moins un élément chimique présent dans ledit effluent comprenant :

- un capteur d'analyse spectrométrique dans le proche infrarouge orienté vers une partie dudit conduit apte à permettre la propagation des ondes électromagnétiques dans le proche infrarouge au travers de celle-ci, ledit capteur étant apte à mesurer des valeurs de l'absorbance dudit effluent pour différentes longueurs d'ondes dans une bande de longueur d'ondes prédéterminée du domaine proche infrarouge ;
- des moyens d'acquisition d'une pluralité desdites mesures de valeurs de l'absorbance, destinés à être activés lors du remplissage de ladite cuve ; et
- des moyens de traitement desdites mesures acquises configurés de sorte à fournir une valeur de ladite concentration à partir desdites mesures.

Selon l'invention, un tel procédé comprend les étapes suivantes :

- mesure de l'absorbance dudit effluent pour différentes longueurs d'ondes dans une bande de longueur d'ondes prédéterminée du domaine proche infrarouge au travers d'une partie dudit conduit, lors d'une étape de remplissage de ladite cuve avec ledit effluent ;
- traitement desdites mesures de sorte à obtenir une valeur de ladite concentration à partir desdites valeurs d'absorbance mesurées.

Selon un aspect particulièrement avantageux de l'invention, lors de ladite étape de traitement, ladite concentration c dudit élément chimique est calculée selon la loi mathématique :

$$c = \mathrm{k0} + \sum_{i=1}^{i=n} ki \times \bar{X}(\lambda i) \text{ , avec } n \geq 20$$

où $\bar{X}(\lambda i)_{(i \in [1;n])}$ sont les valeurs moyennes de l'absorbance mesurées pour n longueurs d'ondes caractéristiques $\lambda i_{(i \in [1;n])}$ de la composition dudit effluent sélectionnées dans ladite bande de longueur d'ondes prédéterminée et k0 et $ki_{(i \in [1;n])}$ sont des constantes qui dépendent de l'espèce des animaux, ou d'un type d'animaux, ayant engendré ledit effluent.

On notera que dans le cadre de l'invention, on entend par type d'animaux, un sous groupe d'une espèce animale, et par exemple des vaches laitières, des porcs charcutiers, ...

L'invention concerne enfin un produit programme d'ordinateur comprenant des instructions de code de programme pour la mise en œuvre de l'étape de traitement du procédé de détermination de la concentration d'au moins un élément chimique décrit ci-dessus, lorsqu'il est exécuté par un processeur.

**5. Liste des figures**

D'autres caractéristiques et avantages de l'invention apparaîtront plus clairement à la lecture de la description suivante de deux modes de réalisation de l'invention, donnés à titre de simples exemples illustratifs et non limitatifs, et des dessins annexés parmi lesquels :

- la figure 1 est une vue d'ensemble d'un exemple de mode de réalisation d'une tonne à lisier selon l'invention de mesure de la concentration d'un élément chimique composant le lisier ;
- la figure 2 est une vue de détail en perspective du dispositif de détermination de la concentration d'au moins un élément chimique présent dans un effluent contenu dans la cuve de la tonne, équipant la tonne présentée en référence à la figure 1, dans une configuration permettant son nettoyage;
- la figure 3 est une vue de détail en coupe du dispositif de détermination de la concentration présenté en référence à la figure 2 ;
- la figure 4 est une vue de détail en coupe d'un autre exemple de mode de réalisation d'un dispositif de détermination de la concentration d'au moins un élément chimique présent dans un effluent équipant une tonne selon l'invention ;
- la figure 5 est une représentation synoptique des étapes d'un exemple de procédé de détermination de la concentration d'au moins un élément chimique présent dans un effluent contenu dans la cuve d'une tonne selon l'invention.

**6. Description détaillée de l'invention**

6.1. Exemple de mode de réalisation de l'invention

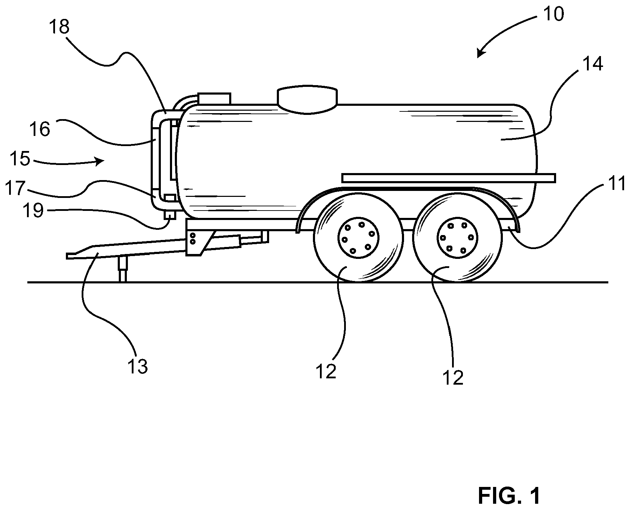

On a illustré sur la **figure 1** un exemple de mode de réalisation d'une tonne à lisier 10 selon l'invention destinée au transport et à l'épandage des effluents d'élevage.

Cette tonne à lisier 10 est formée d'un châssis 11 supporté ici par deux essieux 12, se prolongeant vers l'avant par une flèche 13 d'attelage à un tracteur (non représenté sur la figure 1). Ce châssis 11 supporte une cuve 14 étanche, destinée à être remplie de lisier, par exemple à l'aide d'une pompe et d'un bras de pompage (non représentés sur la figure 1).

Pour contrôler le remplissage et le niveau de lisier dans la cuve 14, celle-ci est équipée dans sa partie avant, à l'aplomb de la flèche 13, d'un tube indicateur de niveau 15, qui forme une dérivation de la cuve, dont le diamètre est sensiblement de 120 mm pour éviter son engorgement. Ce tube de jauge 15 en trois parties comprend une portion de tube transparent 16 verticale entre deux portions de raccordement 17, 18 à la cuve 14. La portion inférieure 17 du tube de jauge 15 est raccordée sensiblement au niveau de la base de la cuve 14 et permet au lisier de remonter jusqu'au tube transparent 16. La portion supérieure 18 du tube permet de rejeter le lisier excédentaire dans la partie supérieure de la cuve. Ainsi, l'agriculteur peut par exemple, surveiller à l'aide de cette jauge de niveau, depuis la cabine de son tracteur, l'évolution progressive du remplissage, ou vice-versa de la vidange, du lisier contenu dans la tonne.

Par ailleurs, le tube de jauge 15 est équipé d'un dispositif de détermination de la concentration en azote et en phosphore présents dans le lisier (non représenté sur la figure 1) posé sur un support 19 en inox fixé sur la portion inférieure 17 du tube de jauge.

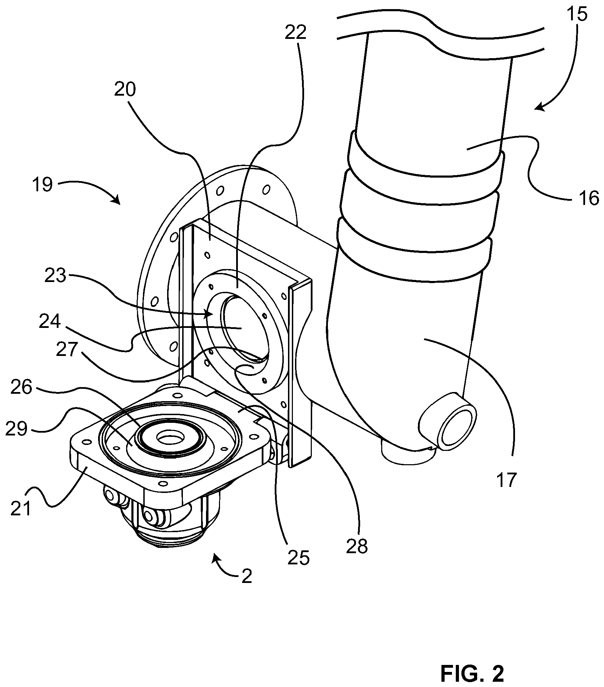

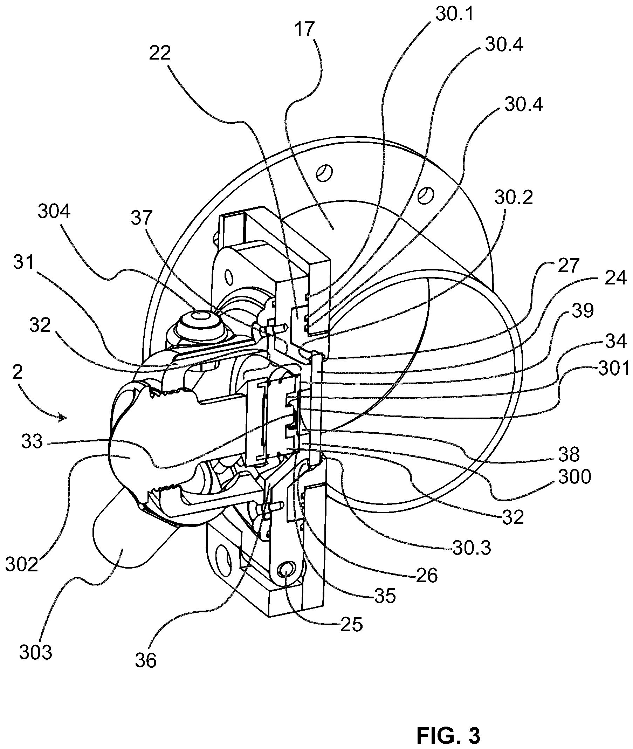

Sur les **figures 2 et 3** on a représenté ce dispositif 2 de détermination de la concentration en azote et en phosphore, respectivement lors du nettoyage du conduit 17, et en fonctionnement.

Comme on peut le voir sur la figure 2, le support 19 est formé d'un socle 20 vertical soudé sur la portion inférieure 17 de raccordement du tube de jauge 15 et d'un volet 21 sur lequel est fixé un capteur d'analyse spectrométrique.

On remarque également sur la figure 2 que le socle 20 comprend un support 22 qui présente en son centre une lumière 23 de communication avec le volume intérieur du tube de jauge 15 au niveau de la portion inférieure 17 de raccordement à la cuve 14.

Cette lumière 23 de sensiblement 50 mm de diamètre est obstruée en fonctionnement (voir la figure 3) par un hublot 24 qui assure l'étanchéité du conduit du tube de jauge 15 sous une pression de 1,5 bar au moins. Ainsi, le hublot 24 a une épaisseur comprise entre 1 et 8 mm, avantageusement entre 1,5 et 6,5 mm, préférentiellement entre 2,5 et 5 mm. Par ailleurs, ce hublot en quartz apte à laisser passer les ondes électromagnétiques dans le proche infrarouge notamment est neutre pour ne pas affecter les ondes électromagnétiques qui le traversent.

En outre, dans ce mode de réalisation particulier de l'invention, le hublot 24 est amovible. Il peut être déposé de son support 22 pour permettre le nettoyage de sa face interne aussi bien que sa face externe (voir la figure 2). Cela permet également son remplacement lorsque le hublot 24 est trop usé, notamment par des rayures répétées dues au lisier dont certains constituants tels le sable ou les pierres sont abrasifs. Pour effectuer ce nettoyage ou ce remplacement, on bascule le volet 21 de 90° vers le bas, autour d'une charnière 25 sensiblement horizontale présente entre la base du socle 20 et le volet 21. Le volet 21 ouvert en butée en position horizontale permet alors d'extraire le hublot 24 et par exemple le poser sur le volet 21 pour le nettoyer.

Dans une variante de ce mode de réalisation particulier de l'invention, il peut être envisagé que le hublot soit monté basculant pour accéder à l'intérieur du tube 17 et procéder au nettoyage du tube 17 et du hublot 24.

Comme on peut le voir sur les figures 2 et 3, le hublot 24 est maintenu en position dans le support 22, par le volet 21 qui est équipé d'une lèvre 26 d'appui sur la périphérie du hublot 24 en vis-à-vis d'un épaulement 27 ménagé sur le support 22. Par ailleurs, le support 22 du hublot 24 comprend en périphérie de la lumière 23 une empreinte tronconique femelle 28 de centrage apte à accueillir une section tronconique 29 de la lèvre 26 ce qui garantit ainsi le bon positionnement, centré du volet 21 par rapport au socle 20.

Sur la figure 3, on peut voir le volet 21 en position de fonctionnement, maintenu appliqué sur le socle 20 par quatre boulons (non représentés sur cette figure). Le volet 21 écrase un ensemble de joints toriques 30 concentriques qui complète l'étanchéité du tube de jauge 15 assurée par le hublot 24. Cet ensemble de joints toriques 30 se compose d'un premier joint torique 30.1 externe entre le volet 21 et le socle 20, d'un deuxième joint torique 30.2 entre la lèvre 26 du volet 21 et le hublot 24, d'un troisième joint torique 30.3 entre le hublot 24 et l'épaulement 27 du support 22 et de deux joints toriques supplémentaires 30.4 entre le socle 20 et le support 22.

Sur la coupe de la figure 3, on peut également voir un capteur spectral dans le proche infrarouge 32 également connu sous la terminologie anglophone « NIR spectroscopy » (où NIR est l'acronyme de « Near InfraRed » en anglais), à l'intérieur d'un capot 31 de protection. Le capteur 32 spectrométrique comprend dans un boîtier un détecteur 33 centrée encadré par deux lampes tungstène 34 sous vide formant un module spectral. Le détecteur 33 du type InGaAs (Indium gallium arsenide) permet la détection de longueurs d'onde comprises dans l'intervalle 1350 - 2450 nm et de préférence entre 1550 et 1950 nm. Elle permet donc notamment de détecter la présence d'Azote (N) et de Phosphore (P).

Ce capteur 32 spectrométrique est monté dans un lamage 35 d'une embase 36, fixée avec le capot 31 par des vis au volet 21. Cette embase 36 qui comprend une portion tronconique 37 de centrage avec la face intérieure de la lèvre 26 assure le positionnement du capteur 32 spectrométrique face à l'alésage 38 et au hublot 24.

Ainsi, l'onde électromagnétique émise par la lampe tungstène 34 traverse le hublot 24 et pénètre dans la matrice du lisier. Une partie des ondes électromagnétiques est absorbée par des constituants au sein de la matrice tandis qu'une autre est réfléchie par la matrice à travers le hublot 24. Les ondes électromagnétiques réfléchies sont en partie captées par le détecteur 33 du capteur 32 spectrométrique qui les accumule pour former un spectre représentatif de la matrice analysée présente face au détecteur à l'instant t. Le dispositif de mesure 2 effectue par conséquent de la spectroscopie par mesure de l'absorbance du lisier par rapport à celle d'une surface blanche de référence dont la réflexion est maximale, pour déterminer la concentration d'une molécule dans le produit.

Le volume, à l'intérieur du tube de jauge 15, de la matrice de lisier analysé par le capteur spectrométrique 32, est fixé par la distance ou épaisseur 300 entre le hublot 24 et la surface d'appui 39 au fond du lamage 35.

Ainsi, en fonction de la distance focale du capteur 32 spectrométrique on peut sélectionner une profondeur d'analyse en changeant l'embase 36 par une embase dont l'épaisseur 300 est adaptée. Typiquement l'épaisseur 300 est comprise entre 0 et 4 mm et celle du hublot 24 est sensiblement de 2 mm. De plus, la distance focale du capteur 32 spectrométrique est sensiblement de 10 mm. Ceci permet un réglage de la profondeur d'analyse entre 2 et 8 mm. Ainsi, la profondeur d'analyse est de 8 mm lorsque l'épaisseur 300 de l'embase 36 est nulle. La profondeur est de 7 ou 6 mm lorsque l'épaisseur 300 est de 1, respectivement 2 mm.

Au fond du lamage 35 l'alésage 38 est obstrué par une vitre 301 qui assure la protection du capteur 32 spectrométrique contre des saletés qui pourraient s'introduire dans le dispositif de mesure lorsque le volet 21 est ouvert pour le nettoyage du hublot 24.

En outre, un bouchon 302 réglable et étanche appuie sur l'arrière du capteur 32 spectrométrique et le maintien en position plaqué sur l'embase 36.

Par ailleurs, le capot 31 est traversé par une canalisation 303 de protection d'arrivée des fils électriques (non représentés) assurant la connexion électrique entre le capteur 32 spectrométrique et une unité de calcul déportée (non représentée sur les figures 2 et 3) qui permet aux deux éléments de communiquer pour notamment transférer les spectres accumulés par le capteur 32 spectrométrique à l'unité de calcul pour être interprété.

Enfin, le capot 31 est équipé d'un interrupteur 304 étanche, du type bouton-poussoir. L'interrupteur 304 permet de démarrer une procédure de calibration du capteur 32 spectrométrique qui consiste à mesurer le bruit interne du capteur 32 spectrométrique pour le déduire des futurs spectres capturés. Pour cela, l'acquisition d'un spectre à l'aide du détecteur 33 est réalisée avec les lampes tungstène 34 éteintes. Cette procédure est connue sous l'appellation « faire un noir ».

Dans un second temps, l'interrupteur 304 permet en l'absence de produit dans le tube de jauge 15 qui est propre, de démarrer une procédure de réglage du capteur 32 spectrométrique sur une intensité de référence matérialisée par un étalon. Cette procédure qui est connue sous l'appellation « faire un blanc » est lancée par l'utilisateur après un simple nettoyage de la vitre 301 et du hublot 24, éventuellement précédé par un rinçage de la cuve 14 et plus particulièrement du tube de jauge 15 pour un résultat optimal. Ainsi, lors des captures en présence de lisier, seules les raies des éléments mesurés présents dans le lisier apparaissent dans les spectres.

Il convient de noter le dispositif 2 étant placé sur le côté de la portion inférieure 17 horizontale du tube de jauge 15 et non pas en dessous ou au-dessus, les mesures ne sont perturbées ni par un dépôt en partie basse qui résulte d'une décantation du lisier, ni par le passage de bulles au sommet de la portion inférieure 17 horizontale du tube de jauge 15. En outre, l'échantillon de lisier présent dans le tube de jauge 15 se déplace dans le tube à la vitesse de montée du lisier dans la cuve 14 qui est bien plus faible que la vitesse du lisier dans les canalisations d'alimentation ou de vidange, ce qui augmente la fiabilité des mesures. Par ailleurs, le lisier remontant dans le tube de jauge est d'une composition plus homogène que celui présent dans la cuve.

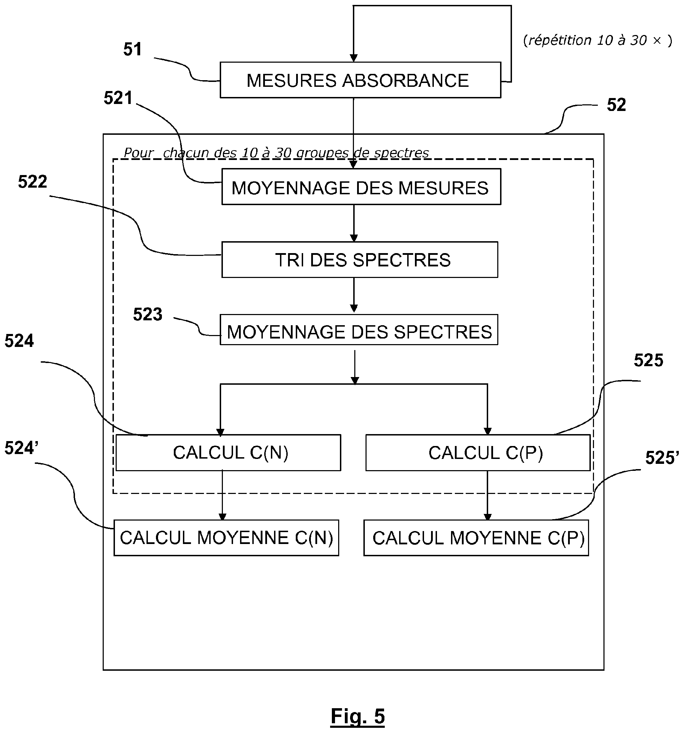

On détaille par la suite, en relation avec la figure 5, qui est une représentation synoptique, sous forme de diagramme bloc, des étapes d'un exemple de procédé de détermination de la concentration en azote total et en phosphore présent dans le lisier, les différentes étapes de mesure d'absorbance réalisées par le capteur d'analyse spectrométrique 32 lors du remplissage de la cuve 14, et le traitement de ces mesures effectué par une unité de calcul accolée au capteur 32.

Dans des variantes du procédé de l'invention, il peut également être prévu que le traitement des mesures soit réalisé par une unité de calcul déportée sur un autre partie de la tonne ou sur le tracteur tirant la tonne.

Cinq secondes après le début du remplissage de la cuve 14, on acquiert successivement à l'aide d'une carte d'acquisition de données reliée au capteur 12, pour 41 longueurs d'ondes régulièrement espacées de 10 nm entre 1550 et 1950 nm, 100 mesures de l'absorbance pour chacune des 41 longueurs d'ondes (étape 51). Ces séries de mesures sont répétées cinq fois lors de l'étape 51 sur une durée totale d'environ 1 seconde, en balayant cinq fois la plage de fréquence [1550 nm ; 1950 nm]. On a donc acquis à l'issue de l'étape 51 5 séries de 100 mesures pour chacune des 41 longueurs d'ondes.

On notera que, dans ce mode de réalisation particulier de l'invention, le capteur 32 et l'acquisition des données sont déclenchés automatiquement par une unité d'activation comprenant des moyens de détection du démarrage de la pompe de remplissage de la cuve, après une durée prédéterminée de 5 secondes suivant le démarrage de la pompe de remplissage. Dans des variantes de ce mode de réalisation de l'invention, il peut être envisagé d'activer le capteur 32 et la carte d'acquisition après une durée de 2, 3, 4, 10 ou 20 secondes suivant le démarrage de la pompe de remplissage.

Dans une variante de ce mode de réalisation particulier de l'invention, on peut choisir de sélectionner un nombre plus important de longueurs d'ondes dans la plage de longueur d'ondes [1550 nm ; 1950 nm], espacées entre elles de 1 à 10 nm.

L'étape 51 est répétée entre 10 et 30 fois lors du remplissage de la cuve.

Les données numériques acquises lors des 10 à 30 étapes 51 à l'aide d'une carte d'acquisition de données reliée au capteur 12 sont ensuite transmises à l'unité de calcul pour être traitées lors d'une étape 52.

Au cours de l'étape 52, on réalise dans un premier temps, dans une sous-étape 521, une moyenne des 100 valeurs de l'absorbance de chaque série de mesure réalisée pour chacune des 41 longueurs d'ondes à chaque balayage de la plage de fréquence [1550 nm ; 1950 nm].

On obtient alors entre 10 et 30 groupes de 5 spectres discrets d'absorption.

On applique ensuite, dans une sous-étape 522, un algorithme de tri des spectres discrets à chaque groupe de 5 spectres discrets d'absorption, afin d'exclure les spectres considérés comme aberrants.

Dans cette sous-étape 522, on s'appuie sur une approche statistique. Plus précisément, on calcule le résidu et le coefficient $T^2$ et on définit des limites statistiques sur ces deux valeurs permettant d'inclure environ 95% de la population. Les spectres hors de ces limites sont considérés comme aberrants et exclus.

On détermine ensuite, dans une étape 523, un spectre discret moyen pour chaque groupe de spectres à partir des spectres discrets non exclus à l'étape 522.

Dans une étape 524, on calcule, pour chaque groupe de spectres discrets d'absorption, la concentration en azote c(N) en appliquant la formule mathématique :

$$c(N) = k0 + \sum_{i=1}^{i=41} ki \times \bar{X}(\lambda i) \quad , \quad \text{où } \bar{X}_{(\lambda i)}$$

$_{(i \in [1;41])}$ sont les valeurs moyennes de l'absorbance correspondant au spectre discret moyen obtenu à l'étape 523, pour les 41 longueurs d'ondes caractéristiques $\lambda i$ $_{(i \in [1;41])}$. k0 et ki $_{(i \in [1;41])}$ sont des constantes de référence qui dépendent de l'espèce des animaux ayant engendré le lisier, par exemple des bovins, des porcs, des canards, ou des poulets. On obtient donc à l'issue de l'étape 524 dix à trente valeurs de concentration en azote total.

Dans une étape 525, on calcule également, pour chaque groupe de spectres discrets d'absorption, la concentration en phosphore c(P) en appliquant la formule mathématique :

$$c(P) = k'0 + \sum_{i=1}^{i=41} k'i \times \bar{X}(\lambda i), \quad \text{où } k'0 \text{ et } k'i$$

$_{(i \in [1;41])}$ sont des constantes de référence qui dépendent de l'espèce des animaux ayant engendré le lisier, par exemple des bovins, des porcs, des canards, ou des poulets. On obtient par conséquent à l'issue de l'étape 525 dix à trente valeurs de concentration en phosphore.

On notera que les constantes kj $_{(j \in [0;41])}$ et k'j $_{(j \in [0;41])}$ ont été obtenues par constitution d'une base de données de référence constituée des résultats de l'analyse spectrométrique de plusieurs centaines de lisiers pour chaque espèce ou type d'animaux, et de la caractérisation de ces lisiers par des méthodes de laboratoire.

Dans des étapes 524' et 525', on calcule respectivement la moyenne des valeurs de concentration en azote total et de concentration en phosphore obtenues aux étapes 524 et 525.

Dans des variantes de ce mode de réalisation particulier de l'invention, il peut également être prévu que l'unité de calcul soit également configurée pour déterminer une valeur moyenne de la concentration en potassium, en carbone, en matière organique et/ou en métaux présents dans le lisier.

Les valeurs moyennes de la concentration en azote total et en phosphore calculées aux étapes 524' et 525' sont transmises à un écran de contrôle dans la cabine du tracteur pour y être affichées et à une unité d'asservissement qui génère, en fonction de ces concentrations, un signal contenant des instructions de réglage d'une vanne de distribution montée sur la rampe d'épandage de la tonne.

6.2. Autres exemples de mode de réalisation de l'invention

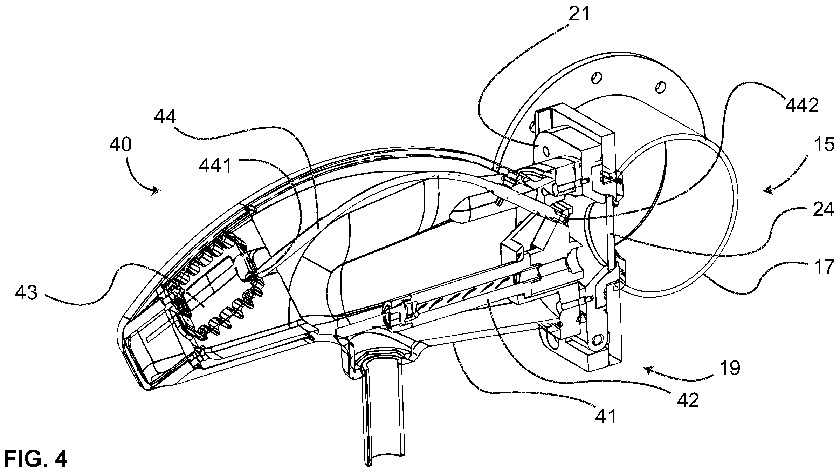

On a représenté sur la **figure 4** une vue de détail en coupe du dispositif embarqué de mesure 40 fixé sur le volet 21 du support 19 en fonctionnement sur la portion inférieure 17 du tube de jauge 15. Ce dispositif de mesure 40 comprend dans un capot 41 de protection une lampe 42 et un capteur 43 dont le détecteur est couplé à une première extrémité 441 d'une fibre optique 44 dont une seconde extrémité 442 est maintenue face à la lumière 23 du support 22 devant le hublot 24.

La lampe 42 alignée avec le hublot 24 émet une onde électromagnétique dont une partie est réfléchie par la matrice du lisier à travers le hublot 24 et captée par la seconde extrémité 442 de la fibre optique 44. Cette onde électromagnétique réfléchie est alors guidée par la fibre optique 44 jusqu'au détecteur du capteur 43.

Le capteur 43 accumule chaque longueur d'onde acquise qui correspond à un élément chimique sous la forme d'un spectre représentatif de la matrice de lisier analysée présente face au détecteur à l'instant t. En outre, il transmet le spectre obtenu à une unité de calcul (non représentée sur la figure 4) pour être analysé.

6.3. Autres caractéristiques optionnelles et avantages de l'invention

Dans des variantes des modes de réalisation de l'invention détaillés ci-dessus, il peut également être prévu :

- de mettre en oeuvre un bras de pompage pour remplir la cuve de la tonne à lisier ;
- de mettre en oeuvre un équipement d'épandage, tel une rampe d'épandage à pendillards, une rampe d'épandage à jets, ou encore une buse simple, double ou triple ;
- de mettre en oeuvre un équipement enfouisseur, tel un enfouisseur à dents, un enfouisseur polyvalent, un enfouisseur pour les prairies ;
- d'utiliser une cuve en fibre de verre, ou en acier galvanisé revêtu ou non à l'intérieur d'un peinture époxy, ou tout autre matériau compatible avec le stockage d'effluents d'élevage, boues de stations d'épurations et autres déchets destinés à l'épandage ;
- que la partie du conduit apte à permettre la propagation des ondes électromagnétiques dans le proche infrarouge au travers de celle-ci soit un tube transparent en PVC, PMMA ou en tout autre matériau transparent ;
- de mesurer le bruit à l'aide d'une mire noire permettant de tracer le vieillissement de la lampe tungstène et l'usure du hublot dont la transparence est affectée par les rayures sur la surface tournée vers l'intérieur du conduit par le lisier qui est abrasif.

**Revendications**

1. Tonne (10) destinée à contenir au moins un effluent d'élevage, tel que du lisier, comprenant :

    - un conduit (15) raccordé sensiblement à la base de la cuve (14) de ladite tonne (10) ;
    - des moyens de détermination de la concentration d'au moins un élément chimique présent dans ledit effluent comprenant :

        - un capteur (32) d'analyse spectrométrique dans le proche infrarouge orienté vers une partie (17) dudit conduit (15) apte à permettre la propagation des ondes électromagnétiques dans le proche infrarouge au travers de celle-ci, ledit capteur (32) étant apte à mesurer des valeurs de l'absorbance dudit effluent pour différentes longueurs d'ondes dans une bande de longueur d'ondes prédéterminée du domaine proche infrarouge ;
        - des moyens d'acquisition d'une pluralité desdites mesures de valeurs de l'absorbance ; et
        - des moyens de traitement desdites mesures acquises configurés de sorte à fournir une valeur de ladite concentration à partir desdites mesures ;

    - des moyens de génération d'un signal contenant des instructions d'actionnement d'une vanne de distribution dudit effluent et/ou de contrôle de l'avance d'un tracteur tirant ladite tonne (10) en fonction de ladite ou desdites concentrations,

    ledit conduit (15) étant un conduit inapte à permettre le déversement dudit effluent sur un sol, tel qu'un tube de jauge, et ledit capteur (32) et lesdits moyens d'acquisition étant destinés à être activés lors du remplissage de ladite cuve (14).

2. Tonne selon la revendication 1, **caractérisée en ce qu'**elle comprend des moyens d'activation dudit capteur (32) et desdits moyens d'acquisition sensiblement au démarrage du remplissage de ladite cuve (14).

3. Tonne selon l'une quelconque des revendications 1 et 2, **caractérisée en ce que** ladite partie (17) dudit conduit (15) apte à permettre la propagation des ondes électromagnétiques dans le proche infrarouge au travers de celui-ci comprend un hublot (24) obstruant au moins partiellement une lumière (23) formée dans une paroi d'un tube.

4. Tonne selon la revendication 3, **caractérisée en ce que** ledit hublot (24) est monté amovible et/ou basculant par rapport audit tube.

5. Tonne selon l'une quelconque des revendications 1 à 4, **caractérisée en ce que** ladite partie (17) dudit conduit (15) apte à permettre la propagation des ondes électromagnétiques dans le proche infrarouge au travers de celle-ci est sensiblement horizontale et située à proximité de la base de la cuve (14).

6. Tonne selon l'une quelconque des revendications 1 à 5, **caractérisée en ce que** ledit capteur (32) d'analyse spectrométrique est monté sur un volet (21) mobile par rapport audit conduit (15).

7. Tonne selon l'une quelconque des revendications 1 à 6, **caractérisée en ce que** ladite bande de longueur d'ondes prédéterminée présente une borne inférieure comprise entre 1350 et 1600 nm, de préférence égale à 1550nm et une borne supérieure comprise entre 1800 et 2450 nm, de préférence est égale à 1950nm.

8. Tonne selon l'une quelconque des revendications 1 à 7, **caractérisée en ce que** ledit capteur d'analyse spectrométrique (32) et ladite partie (17) du conduit (15) apte à permettre la propagation des ondes électromagnétiques dans le proche infrarouge au travers de celle-ci, sont agencées l'un par rapport à l'autre de sorte qu'un point focal de l'émetteur dudit capteur d'analyse spectrométrique est situé à l'intérieur dudit conduit (15), à une distance de 0,01 à 7 mm de la paroi interne de ladite partie (17) dudit conduit (15).

9. Tonne selon l'une quelconque des revendications 1 à 8, **caractérisée en ce que** ledit capteur (32) d'analyse spectrométrique est apte à mesurer au moins 2000, de préférence au moins 3000, encore plus préférentiellement au moins 4000 valeurs de l'absorbance dans ladite bande de longueur d'ondes prédéterminée, par seconde.

10. Tonne selon l'une quelconque des revendications 1 à 9, **caractérisée en ce que** la valeur de l'absorbance dudit capteur d'analyse spectrométrique (32) est ajustée à une valeur nulle lorsque ladite partie (17) du conduit (15) est vide et propre.

11. Procédé de détermination de la concentration d'au moins un élément chimique présent dans un effluent contenu dans la cuve d'une tonne (10) selon la revendication 1, comprenant un conduit (15) inapte à permettre le déversement dudit effluent sur un sol et raccordé sensiblement à la base de la cuve (14) de ladite tonne (10), et comprenant les étapes suivantes :

   - mesure (51) de l'absorbance dudit effluent pour différentes longueurs d'ondes dans une bande de longueur d'ondes prédéterminée du domaine proche infrarouge au travers d'une partie (17) dudit conduit (15), lors d'une étape de remplissage de ladite cuve (14) avec ledit effluent ;
   - traitement (52) desdites mesures de sorte à obtenir une valeur de ladite concentration à partir desdites valeurs d'absorbance mesurées.

12. Procédé selon la revendication 11, **caractérisé en ce que**, lors de ladite étape de traitement (52), ladite concentration c dudit élément chimique est calculée selon la loi mathématique :

$$c = \mathrm{k0} + \sum_{i=1}^{i=n} ki \times \bar{X}(\lambda i) \, ,$$

avec n ≥ 20
où $\bar{X}(\lambda i)_{(i \in [1;n])}$ sont les valeurs moyennes de l'absorbance mesurées pour n longueurs d'ondes caractéristiques $\lambda i_{(i \in [1;n])}$ de la composition dudit effluent sélectionnées dans ladite bande de longueur d'ondes prédéterminée et k0 et ki $_{(i \in [1;n])}$ sont des constantes qui dépendent de l'espèce des animaux, ou d'un type d'animaux, ayant engendré ledit effluent.

13. Produit programme d'ordinateur comprenant des instructions de code de programme pour la mise en œuvre de l'étape de traitement du procédé de détermination de la concentration d'au moins un élément chimique selon la revendication 11 ou selon la revendication 12, lorsqu'il est exécuté par un processeur.

**Patentansprüche**

**1.** Tank (10), der bestimmt ist, mindestens ein aus Zuchtbetrieben stammendes Abwasser wie Gülle zu enthalten, umfassend:

- eine Leitung (15), die etwa an der Basis des Behälters (14) des Tanks (10) angeschlossen ist;
- Mittel zum Bestimmen der Konzentration mindestens eines chemischen Elements, das in dem Abwasser enthalten ist, umfassend:

- einen Sensor (32) für die spektrometrische Analyse im Nahinfrarot, der zu einem Teil (17) der Leitung (15) gerichtet ist, der imstande ist, die Verbreitung der elektromagnetischen Wellen im Nahinfrarot durch diese zu erlauben, wobei der Sensor (32) imstande ist, die Absorbanzwerte des Abwassers für verschiedene Wellenlängen in einem vorbestimmten Wellenlängenband des Nahinfrarotbereichs zu messen;
- Mittel zum Erfassen einer Vielzahl der Absorbanzwertmessungen; und
- Mittel zum Verarbeiten der erfassten Messungen, die derart ausgelegt sind, dass ein Konzentrationswert auf der Basis der Messungen bereitgestellt wird;

- Mittel zum Erzeugen eines Signals, das Betätigungsbefehle eines Ventils zum Verteilen des Abwassers und/oder zur Kontrolle des Vorankommens eines Traktors enthält, der den Tank (10) in Abhängigkeit von der oder den Konzentrationen zieht,

wobei die Leitung (15) eine Leitung ist, die nicht imstande ist, die Verklappung des Abwassers auf einem Boden zu erlauben, wie ein Messrohr, und der Sensor (32) und die Erfassungsmittel bestimmt sind, beim Befüllen des Behälters (14) aktiviert zu sein.

**2.** Tank nach Anspruch 1, **dadurch gekennzeichnet, dass** er Aktivierungsmittel des Sensors (32) und Erfassungsmittel etwa beim Starten des Befüllens des Behälters (14) umfasst.

**3.** Tank nach einem der Ansprüche 1 und 2, **dadurch gekennzeichnet, dass** der Teil (17) der Leitung (15), der imstande ist, die Verbreitung der elektromagnetischen Wellen im Nahinfrarot durch diese zu erlauben, ein Sichtfenster (24) umfasst, das mindestens teilweise eine Öffnung (23) verdeckt, die in einer Wand eines Rohrs ausgebildet ist.

**4.** Tank nach Anspruch 3, **dadurch gekennzeichnet, dass** das Sichtfenster (24) lösbar und/oder schwenkbar in Bezug auf das Rohr angebracht ist.

**5.** Tank nach einem der Ansprüche 1 bis 4, **dadurch gekennzeichnet, dass** der Teil (17) der Leitung (15), der imstande ist, die Verbreitung der elektromagnetischen Wellen im Nahinfrarot durch diese zu erlauben, etwa horizontal ist und sich in der Nähe der Basis des Behälters (14) befindet.

**6.** Tank nach einem der Ansprüche 1 bis 5, **dadurch gekennzeichnet, dass** der spektrometrischen Analysesensor (32) auf einer in Bezug auf die Leitung (15) beweglichen Klappe (21) angebracht ist.

**7.** Tank nach einem der Ansprüche 1 bis 6, **dadurch gekennzeichnet, dass** das vorbestimmte Wellenlängenband eine untere Grenze aufweist, die zwischen 1350 und 1600 nm liegt, vorzugsweise gleich 1550 nm ist und eine obere Grenze, die zwischen 1800 und 2450 nm liegt, vorzugsweise gleich 1950 nm ist.

**8.** Tank nach einem der Ansprüche 1 bis 7, **dadurch gekennzeichnet, dass** der spektrometrische Analysesensor (32) und der Teil (17) der Leitung (15), der imstande ist, die Verbreitung der elektromagnetischen Wellen im Nahinfrarot durch diese zu erlauben, im Verhältnis zueinander so eingerichtet sind, dass sich ein Fokalpunkt des Senders des spektrometrischen Analysesensors im Inneren der Leitung (15) in einem Abstand von 0,01 bis 7 mm von der Innenwand des Teils (17) der Leitung (15) befindet.

**9.** Tank nach einem der Ansprüche 1 bis 8, **dadurch gekennzeichnet, dass** der spektrometrische Analysesensor (32) imstande ist, mindestens 2000, vorzugsweise mindestens 3000, noch vorzugsweiser mindestens 4000 Absorbanzwerte im vorbestimmten Wellenlängenband je Sekunde zu messen.

**10.** Tank nach einem der Ansprüche 1 bis 9, **dadurch gekennzeichnet, dass** der Absorbanzwert des spektrometrischen Analysesensors (32) auf einen Wert Null eingestellt ist, wenn der Teil (17) der Leitung (15) leer und sauber ist.

**11.** Verfahren zum Bestimmen der Konzentration von mindestens einem chemischen Element, das in einem Abwasser vorhanden ist, das im Behälter eines Tanks (10) nach Anspruch 1 enthalten ist, umfassend eine Leitung (15), die nicht imstande ist, das Verklappen des Abwassers auf einen Boden zu erlauben und etwa an der Basis des Behälters (14) des Tanks (10) angeschlossen ist und die folgenden Schritte umfasst:

- Messen (51) der Absorbanz des Abwassers für verschiedene Wellenlängen in einem vorbestimmten Wellenlängenband des Nahinfrarotbereichs durch einen Teil (17) der Leitung (15) bei einem Schritt des Befüllens des Behälters (14) mit dem Abwasser;
- Verarbeiten (52) der Messungen derart, dass man einen Wert der Konzentration auf der Basis der gemessenen Absorbanzwerte erhält.

12. Verfahren nach Anspruch 11, **dadurch gekennzeichnet, dass** beim Verarbeitungsschritt (52) die Konzentration c des chemischen Elements gemäß dem folgenden mathematischen Gesetz berechnet wird:

$$c = \mathrm{k0} + \sum_{i=1}^{i=n} ki \times \bar{X}(\lambda i),$$

mit $n \geq 20$
wobei $\bar{X}(\lambda i)_{(i \in [1;n])}$ Mittelwerte der gemessenen Absorbanz für n charakteristische Wellenlängen $\lambda i_{(i \in [1;n])}$ der Zusammensetzung des Abwassers sind, die aus dem vorbestimmten Wellenlängenband ausgewählt wurden, und k0 und $ki_{(i \in [1;n])}$ Konstanten sind, die von der Tierart oder einem Tiertyp abhängen, die/der die Abwässer erzeugt hat.

13. Rechnerprogrammprodukt, umfassend Programmcodebefehle für die Durchführung des Verarbeitungsschritts des Verfahrens zur Bestimmung der Konzentration mindestens eines chemischen Elements nach Anspruch 11 oder nach Anspruch 12, wenn es von einem Prozessor ausgeführt wird.

**Claims**

1. A tanker (10) intended to contain at least one livestock effluent, such as manure, comprising:

- a pipe (15) connected substantially to the base of the tank (14) of said tanker (10);
- means for determining the concentration of at least one chemical element present in said effluent comprising :

- a near-infrared spectrometric analysis sensor (32) oriented towards a part (17) of said pipe (15) capable of allowing the propagation of electromagnetic waves in the near-infrared through it, the sensor (32) being capable of measuring values of the absorbance of the effluent for different wavelengths in a predetermined wavelength band in the near-infrared range ;
- means for acquiring a plurality of said absorbance value measurements; and
- means for processing said acquired measurements configured to provide a value of the concentration from said measurements;

- means for generating a signal containing instructions for actuating a valve for distributing said effluent and/or for controlling the advance of a tractor pulling said tanker (10) as a function of said concentration(s),

the conduit (15) being a conduit incapable of allowing the discharge of the said effluent onto the ground, such as a gauge tube, and the sensor (32) and acquisition means being intended to be activated when the said tank (14) is filled.

2. The tanker according to claim 1, **characterised in that** it comprises means for activating said sensor (32) and said acquisition means substantially at the start of filling of said tank (14).

3. The tanker according to any one of claims 1 and 2, **characterised in that** said part (17) of said pipe (15) capable of allowing the propagation of electromagnetic waves in the near infrared through it comprises a porthole (24) at least partially obstructing a hole (23) formed in a wall of a tube.

4. The tanker according to claim 3, **characterised in that** the porthole (24) is mounted so as to be removable and/or tiltable with respect to the tube.

5. The tank according to any one of claims 1 to 4, **characterised in that** the part (17) of the said pipe (15) capable of allowing the propagation of electromagnetic waves in the near infrared through it is substantially horizontal and located close to the base of the tank (14).

6. The tanker according to any one of claims 1 to 5, **characterised in that** the spectrometric analysis sensor (32) is mounted on a flap (21) which is movable relative to the pipe (15).

7. The tanker according to any one of claims 1 to 6, **characterised in that** said predetermined wavelength band has a lower limit between 1350 and 1600 nm, preferably equal to 1550nm, and an upper limit between 1800 and 2450 nm, preferably equal to 1950nm.

8. The tanker according to any one of claims 1 to 7, **characterised in that** said spectrometric analysis sensor (32) and said part (17) of the pipe (15) capable of allowing the propagation of electromagnetic waves in the near infrared therethrough are arranged with respect to each other so that a focal point of the emitter of said spectrometric analysis sensor is located inside said conduit (15), at a distance of 0.01 to 7 mm from the inner wall of said part (17) of said pipe (15).

9. The tanker according to any one of claims 1 to 8, **characterised in that** said spectrometric analysis sensor (32) is capable of measuring at least 2000, preferably at least 3000, even more preferably at least 4000 absorbance values in said predetermined wavelength band, per second.

10. The tanker according to any one of claims 1 to 9, **characterised in that** the absorbance value of said spectrometric analysis sensor (32) is adjusted to a zero value when said part (17) of the pipe (15) is empty and clean.

11. A method for determining the concentration of at least one chemical element present in an effluent contained in the tank of a tanker (10) according to claim 1, comprising a pipe (15) which is incapable of allowing the discharge of said effluent onto the ground and which is connected substantially to the base of the tank (14) of said tanker (10), and comprising the following steps:

   - measuring (51) the absorbance of said effluent for different wavelengths in a predetermined wavelength band in the near infrared range through a portion (17) of said pipe (15), during a step of filling said tank (14) with said effluent;
   - processing (52) said measurements so as to obtain a value of said concentration from said measured absorbance values.

12. The method according to claim 11, **characterised in that** in said treatment step (52) said concentration c of said chemical element is calculated according to the mathematical law :

$$c = k0 + \sum_{i=1}^{i=n} ki \times \overline{X}(\lambda i)$$

with $n \geq 20$
where $\overline{X}(\lambda i)_{(i \in [1;n])}$ are the average absorbance values measured at n characteristic wavelengths $\lambda i_{(i \in [1;n])}$ of the composition of said effluent selected within said predetermined wavelength band and k0 and $ki_{(i \in [1;n])}$ are constants which depend on the species of animals, or a type of animals, which generated said effluent.

13. A computer program product comprising program code instructions for implementing the processing step of the method for determining the concentration of at least one chemical element according to claim 11 or according to claim 12, when executed by a processor.

**FIG. 1**

**FIG. 2**

**FIG. 3**

FIG. 4

**51**

*(répétition 10 à 30 × )*

MESURES ABSORBANCE

**521**

**52**

*Pour chacun des 10 à 30 groupes de spectres*

MOYENNAGE DES MESURES

**522**

TRI DES SPECTRES

**523**

MOYENNAGE DES SPECTRES

**524**

**525**

**524'**

CALCUL C(N)

CALCUL C(P)

**525'**

CALCUL MOYENNE C(N)

CALCUL MOYENNE C(P)

**Fig. 5**

**EP 3 498 069 B1**

## RÉFÉRENCES CITÉES DANS LA DESCRIPTION

**Documents brevets cités dans la description**

- DE 202006015589 U1
- DE 202015005512 U1